# EUROPÄISCHE PATENTANMELDUNG

(11) **EP 4 596 185 A1**
(43) Veröffentlichungstag der Anmeldung: **06.08.2025**
(21) Anmeldenummer: 24154835.3
(22) Anmeldetag: 30.01.2024
(51) Int. Cl.: B25J 15/04, B25J 19/00

(54) **WERKZEUGSCHNITTSTELLE SOWIE ROBOTER MIT EINER SOLCHEN WERKZEUGSCHNITTSTELLE**

(71) Anmelder: IPR-Intelligente Peripherien für Roboter GmbH, 75031 Eppingen (DE)
(72) Erfinder: Schneide, Helge, 74336 Brackenheim (DE)
(74) Vertreter: Witte, Weller und Partner Patentanwälte mbB Stuttgart

(57) **Zusammenfassung**

Vorgeschlagen wird eine Werkzeugschnittstelle (10) zur Ankopplung eines Werkzeugs (200) an den Roboterarm (110) eines Roboters (100). Diese Werkzeugschnittstelle (10) weist eine roboterarmseitige Teileinrichtung (20) und eine werkzeugseitige Teileinrichtung (50). Die beiden Teileinrichtungen (20, 50) weisen eine Kopplungseinrichtung (80) zur mechanischen Ankopplung des Werkzeugs (200) an den Roboterarm (110) auf. Die beiden Teileinrichtungen (20, 50) sind weiterhin zur Übertragung von Daten zwischen der Seite des Werkzeugs (200) und der Seite des Roboters (100) ausgebildet, wobei zu diesem Zweck beide Teileinrichtungen (20, 50) über Kontaktflächen (30, 60) verfügen, die bei mechanischer Ankopplung des Werkzeugs (200) an den Roboter (100) miteinander in Kontakt gelangen.

Dabei ist vorgesehen, dass mindestens eine der Teileinrichtungen (20, 50) über eine Leiterplatine (22, 52) verfügt, die eine Doppelfunktion übernimmt, indem die Leiterplatine (22, 52) Träger der Kontaktflächen (30, 60) der Teileinrichtung (20, 50) ist, und die Leiterplatine (22, 52) darüber hinaus Träger mindestens eines integrierten Schaltkreises (70, 72, 74) und/oder Träger mindestens eines Sensors (76) ist, wobei der integrierte Schaltkreis (70, 72, 74) oder der Sensor (76) an Kontaktflächen (60) derTeileinrichtung (50) angeschlossen ist.

## Beschreibung

### ANWENDUNGSGEBIET UND STAND DER TECHNIK

Die Erfindung betrifft eine Werkzeugschnittstelle zur Ankopplung eines Werkzeugs an den Roboterarm eines Roboter.

Derartige Werkzeugschnittstellen bestehen aus zwei Teileinrichtungen, nämlich einer roboterarmseitigen Teileinrichtung, die fest am distalen Ende eines Roboterarms vorgesehen ist, und einer werkzeugseitigen Teileinrichtung, die am Werkzeug vorgesehen ist. Die roboterarmseitige Teileinrichtung ist üblicherweise an einem Roboterarm angebracht, der über mehrere Schwenkachsen in sich beweglich ist und der an einem Roboter angebracht ist. Die roboterarmseitige Teileinrichtung kann als solche wechselbar am Roboterarm sein, wobei dies allerdings in der Regel mit höherem Aufwand einhergeht und üblicherweise nicht automatisiert ist. Die werkzeugseitige Teileinrichtung verbleibt üblicherweise mit dem zugeordneten Werkzeug oder einem zur Ankopplung desselben vorgesehenen Werkzeughalter verkoppelt. Zu den Werkzeugen, die mit einer werkzeugseitigen Teileinrichtung einer erfindungsgemäßen Werkzeugschnittstelle versehen sein können, gehören unter anderem Werkzeuge zur Applikation von Flüssigkeiten, zum Schweißen oder zur spanenden Bearbeitung von Werkstücken. Weiterhin werden solche werkzeugseitigen Teileinrichtung an Greifern und andere Werkzeugen zur Handhabung von Gegenständen verwendet.

Gattungsgemäße Werkzeugschnittstellen gestatten es, flexibel und mit geringem Aufwand das vom Roboter geführte Werkzeug auszutauschen.

Bekannte Werkzeugschnittstellen dienen nicht nur der mechanischen Kopplung des Werkzeugs an den Roboterarm, so dass das Werkzeug vom Roboterarm geführt und in die jeweils vorgesehenen Bearbeitungspositionen gebracht werden kann, sondern dienen darüber hinaus auch der Zuführung von zumeist flüssigen Verbrauchsmaterialien und Druckluft zum Werkzeug sowie der Zuführung von elektrischer Leistung zum Werkzeug. Zudem dienen bekannte und erfindungsgemäße Werkzeugschnittstellen der Übertragung von üblicherweise digitalen Daten. Diese können beispielsweise Steuersignale sein, die an das Werkzeug übertragen werden, oder es können Informationen sein, die vom Werkzeug an den Roboterarm übertragen werden, um beispielsweise in einer zentralen Steuereinheit des Roboters verarbeitet zu werden.

Die für die Übertragung dieser Daten erforderlichen Kontaktierungen können durch Steckerverbindungen geschaffen werden, die nach dem Ankoppeln eines Werkzeugs über die Werkzeugschnittstelle manuell geschaffen werden. Bekannt ist es jedoch auch, Kontaktflächen zur Übertragung solcher Daten derart an den Teileinrichtungen der Werkzeugschnittstelle vorzusehen, dass durch das mechanische Ankoppeln des Werkzeugs am Roboterarm die entsprechenden Datenverbindungen mit hergestellt werden.

Bei bekannten Lösungen tragen solche Kontaktflächen jedoch signifikant zu der Größe der Teileinrichtungen der Werkzeugschnittstelle bei. In den Teileinrichtungen oder einer der Teileinrichtungen ist üblicherweise eine Leiterplatine oder mehrere Leiterplatinen vorgesehen, die über Kabel mit einer Anschlussbaugruppe verbunden sind, an der die Kontaktflächen derjeweiligen Teileinrichtung vorgesehen sind.

### AUFGABE UND LÖSUNG

Aufgabe der Erfindung ist es, ein Konzept für eine Werkzeugschnittstelle bereitzustellen, welches es gestattet, eine mit einer Leiterplatine versehene Teileinrichtung besonders kompakt bauen zu können.

Erfindungsgemäß wird zu diesem Zweck eine Werkzeugschnittstelle zur Ankopplung eines Werkzeugs an den Roboterarm eines Roboter vorgeschlagen, welche wie folgt ausgebildet ist.

In für sich genommen bekannter Weise weist die Werkzeugschnittstelle eine roboterarmseitige Teileinrichtung und eine werkzeugseitige Teileinrichtung auf. Die beiden Teileinrichtungen weisen eine Kopplungseinrichtung zur mechanischen Ankopplung des Werkzeugs an den Roboterarm auf, so dass im mechanisch gekoppelten Zustand das an der werkzeugseitigen Teileinrichtung vorgesehene Werkzeug mittels des Roboterarms in die jeweils gewünschten Bearbeitungspositionen gefahren werden kann.

Im gekoppelten Zustand liegen die Teileinrichtungen aneinander an und sind zueinander lagefest gesichert.

Vorzugsweise weist die Kopplungseinrichtung mindestens einen konischen oder sich anderweitig verjüngenden Ausrichtungsstift auf, der beim Ankoppeln an das Werkzeug in eine daran vorgesehene korrespondierende Aufnahme einrückt. Insbesondere vorzugsweise sind zwei derartige Ausrichtungsstifte vorgesehen. Alternativ kann der Ausrichtungsstift auch am Werkzeug vorgesehen sein, so dass die roboterarmseitige Werkzeugschnittstelle stattdessen korrespondierende Aufnahme aufweist.

Die Kopplungseinrichtung ist vorzugsweise zur formschlüssigen Kopplung ausgebildet und weist hierfür an einer Teileinrichtung einen Kopplungsstutzen auf, der in eine Kopplungsausnehmung der anderen Teileinrichtung einfahrbar ist, wobei an einer Außenseite des Kopplungsstutzens oder an einer Innenseite der Kopplungsausnehmung mindestens ein verlagerbarerVerriegelungskörpervorgesehen ist, der zwischen einer Freigabestellung und einer formschlüssig verriegelten Stellung der Kopplungseinrichtung verlagerbar ist. Vorzugsweise verfügen beide Teileinrichtungen über einen einstückigen oder mehrstückigen vorzugsweise metallischen Grundkörper, der die Kopplungsausnehmung bzw. den Kopplungsstutzen bildet oder an dem weitere metallische Bauteile zur Bildung der Kopplungsausnehmung und des Kopplungsstutzens angebracht sind. Insbesondere kann es sich bei den Verriegelungskörpern um eine Mehrzahl von Verriegelungskörpern handeln, beispielsweise eine Mehrzahl von Verriegelungskugeln, die in zueinander divergierenden Richtungen verlagerbar sind, um gemeinsam den gekoppelten und verriegelten Zustand der Kopplungseinrichtung bzw. den entriegelten und entkoppelbaren Zustand der Kopplungseinrichtungen herstellen zu können. Vorzugsweise ist an jener Teileinrichtung, an der die Verriegelungskörper vorgesehen sind, ein gemeinsames Aktorenelement vorgesehen, welches durch Verlagerung mittelbar alle Verriegelungskörper gemeinsam in eine verriegelnde Stellung drückt und welches durch entgegengesetzte Verlagerung allen Verriegelungskörpern gemeinsam die Rückkehr in die nicht verriegelnde Stellung ermöglicht.

Die beiden Teileinrichtungen sind darüber hinaus zur Übertragung von elektrischer Leistung und/oder Daten zwischen der Seite des Werkzeugs und der Seite des Roboters ausgebildet, wobei zu diesem Zweck beide Teileinrichtungen über elektrisch leitfähige Kontaktflächen verfügen, die bei mechanischer Ankopplung des Werkzeugs an den Roboter miteinander in Kontakt gelangen. Diese Kontaktflächen sind somit so an den Teileinrichtungen vorgesehen, dass sie bei Verlagerung der Teileinrichtungen aufeinander zu in einer Kopplungsrichtung aneinander in Anlage gelangen. Die Kontaktflächen können als in sich unbewegliche und fest zu einem Grundkörper der jeweiligen Teileinrichtung ausgebildete Kontaktfläche ausgebildet sein. Bevorzugt ist es allerdings, wenn die Kontaktflächen an mindestens einer der Teileinrichtungen federnd gelagerte Kontaktflächen sind, die auch im Falle geringer Lageabweichungen der Teileinrichtungen zueinander eine leitende Verbindung miteinander eingehen. Die Zahl der Kontaktflächen kann stark variieren. Vorzugsweise sind an beiden Teileinrichtungen jeweils mindestens zwei solche Kontaktflächen vorgesehen. Bevorzugt sind allerdings Gestaltungen mit mehr Kontaktflächen, insbesondere mit vier oder mehr Kontaktflächen.

Dabei ist eine Bauweise vorgesehen, die es gestattet, die jeweiligen Teileinrichtungen relativ klein auszugestalten. Hierfür ist vorgesehen, dass mindestens eine der Teileinrichtungen über eine Leiterplatine verfügt, die eine Doppelfunktion übernimmt.

Zum einen ist diese Leiterplatine mit im Weiteren noch näher bezeichneten elektronischen Komponenten versehen, insbesondere mindestens einem integrierten Schaltkreis und/oder mindestens einem Sensor.

Zum anderen bildet die Leiterplatine selbst den Träger, der die Kontaktflächen der jeweiligen Teileinrichtung trägt. Dies bedeutet, dass die Kontaktflächen oder Bauelemente, an denen die gegebenenfalls gefederten Kontaktflächen vorgesehen sind, unmittelbar auf der Leiterplatine vorgesehen sind und von dieser mechanisch in Position gehalten werden.

Eine solche Bauweise führt dazu, dass die Teileinrichtungen vergleichsweise kompakt ausgebildet sein können. Der Bedarf an internerVerkabelung und an Leiterplatinen in erfindungsgemäß ausgestalteten Teileinrichtungen wird reduziert. Zudem wird die Montage erleichtert, da mit dem Einsetzen der Leiterplatine in die betreffende Teileinrichtung gleichzeitig die entsprechenden elektronischen Komponenten montiert werden und eine darüberhinausgehende Verkabelung zwischen den Kontaktflächen und den elektronischen Komponenten nicht erforderlich ist.

Wenngleich es erfindungsgemäß ausreicht, dass eine oder einige der elektronischen Komponenten sowie die Kontaktflächen auf der gleichen Leiterplatine vorgesehen sind und grundsätzlich noch weitere elektronische Komponenten auf anderen Leiterplatinen der gleichen Teileinrichtung vorgesehen sein können, wird es als besonders vorteilhaft angesehen, wenn die betreffende Leiterplatine mit den Kontaktflächen in der jeweiligen Teileinrichtung die einzige Platine darstellt, die mit integrierten Schaltkreisen ausgestattet ist.

Zu den Sensoren, die auf der Leiterplatine vorgesehen sein können, zählen grundsätzlich alle Sensoren, die bei solchen Teileinrichtungen vorgesehen sind, wie beispielsweise Sensoren zur Prüfung des Kopplungszustandes, beispielsweise Kraft- und Positionssensoren. Insbesondere Sensoren, die nicht aufgrund ihres jeweiligen Zweckes an einem besonderen Ort vorgesehen sein müssen, können auf der einer Haupt-Leiterplatine zusammen mit den Kontaktflächen vorgesehen sein. Zu diesen Sensoren zählen insbesondere Sensoren zur Überwachung der Bewegung der Teileinrichtung wie Beschleunigungsaufnehmern oder dergleichen. Sensoren auf der Leiterplatine mit den Kontaktflächen können unmittelbar auf die Leiterplatine verlötet sein oder hier in einen auf die Platine gelöteten Sockel eingesetzt sein. Sofern Sensoren der Teileinrichtung nicht auf der Platine angeordnet sein können und über separate Leiterplatinen verfügen, so sind diese sensorspezifischen zusätzlichen Leiterplatinen und/oder zu spezifischen Aktoren vorgesehene aktorspezifische Leiterplatinen vorzugsweise neben der Haupt-Leiterplatine die einzigen Leiterplatinen der betreffenden Teileinrichtung.

Auch der vorzugsweise auf der Leiterplatine mit Kontaktflächen vorgesehene integrierte Schaltkreis ist entweder unmittelbar auf die Leiterplatine gelötet oder hier in einen fest angebrachten Sockel eingesetzt. Bei dem integrierten Schaltkreis kann es sich insbesondere um einen Mikroprozessor oder um Speicher handeln.

Insbesondere vorzugsweise weist die Leiterplatine mit Kontaktflächen sowohl mindestens einen integrierten Schaltkreis auf, der als Mikroprozessor ausgebildet ist, als auch mindestens einen integrierten Schaltkreis, der als Speicher ausgebildet ist. Auch integrierte Schaltkreise, die sowohl einen Mikroprozessor als auch einen Speicher umfassen, können Verwendung finden.

Eine erfindungsgemäße Werkzeugschnittstelle ist in bereits beschriebener Form mit zwei zu koppelnden Teileinrichtungen versehen. An beiden Teileinrichtungen ist die beschriebene Gestaltung möglich, bei denen eine gemeinsame Leiterplatine elektronische Komponenten und die Kontaktflächen trägt. Als insbesondere vorteilhaft wird eine solche Bauweise jedoch an der werkzeugseitigen Teileinrichtung angesehen.

Verschiedene Anwendungen für den mindestens einen integrierten Schaltkreis, der auf der Leiterplatine mit Kontaktflächen vorgesehen ist, werden insbesondere als vorteilhaft angesehen.

Beim integrierten Schaltkreis handelt es sich vorzugsweise um einen Prozessor, der einen in der Teileinrichtung hinterlegten Programmcode abarbeitet, um auf Basis dessen Sensordaten von Sensoren der Teileinrichtung auszuwerten. Der Programmcode kann dabei insbesondere dafür vorgesehen sein, Sensordaten mit erwarteten Sensordaten zu vergleichen, um beispielsweise die fehlerfreie Funktion des Werkzeugs überprüfen zu können. Insbesondere kann der Programmcode auch dafür ausgebildet sein, die weiterverarbeiteten Daten mindestens eines Sensors und/oder hieraus abgeleitete Erkenntnisse als Daten über die Kontaktflächen an einen Empfänger auf Seiten des Roboters zu senden.

Der Prozessor kann weiterhin einen in der Teileinrichtung hinterlegten Programmcode aufweisen, mittels dessen die Teileinrichtung bzw. insbesondere die werkzeugseitige Teileinrichtung und das hieran angekoppelte Werkzeug im Teach-In-Verfahren programmierbar sind. Diese bedeutet, dass der Programmcode dafür ausgebildet ist, die manuell bewirkte Bewegung vorhandener Aktoren zu überwachen und aus den hier stattfindenden Stellbewegungen eine Ablaufliste von Handlungen abzuleiten. Die hierbei erfassten Stellbewegungen und/oder eine hieraus abgeleitete Ablaufliste von Handlungen kann über die Kontaktflächen an einen Empfänger auf Seiten des Roboters gesendet werden.

Die Leiterplatine, auf der die Kontaktflächen vorgesehen sind, weist vorzugsweise einen integrierten Schaltkreis in Form eines Speicherchips auf. Dieser kann den oben beschriebenen Programmcode enthalten. Darüber hinaus kann der Speicher mit einem Prozessor der Teileinrichtung oder auch über die Kontaktflächen mit einem Prozessor auf Seiten der jeweils anderen Teileinrichtung verbunden sein, um verschiedene Daten aufzunehmen, beispielsweise Daten zur Verwendung des Werkzeugs, in dessen Teileinrichtung der Speicher verbaut ist.

Eine weitere Möglichkeit zur Nutzung eines solchen Speichers besteht darin, in dem Speicher eine Identifikationskennung zu speichern. Eine solche Identifikationskennung kann für den Typ des jeweiligen Werkzeugs eindeutig sein. Sie kann jedoch auch für die konkrete Teileinrichtung in Art einer Seriennummer eindeutig sein. Vorzugsweise ist ein Prozessor der werkzeugseitigen Teileinrichtung dafür ausgebildet, diese Kennung auszulesen und an eine zentrale Steuereinrichtung zu senden, so dass hierüber geprüft werden kann, ob im Rahmen eines Kopplungsaktes das richtige Werkzeug angekoppelt worden ist.

Ebenfalls kann ein solcher Speicherchip auf der Leiterplatine der werkzeugseitigen Teileinrichtung dafür genutzt werden, eine Benutzungshistorie aufzunehmen. In einem solchen Fall kann ein Prozessor der gleichen Teileinrichtung, insbesondere ein auf der gleichen Leiterplatine vorgesehener Prozessor, oder ein Prozessor des Werkzeugs oder des Roboters mittels entsprechendem Befehlscode dafür genutzt werden, im Betrieb anfallende Daten in diesem Speicher abzulegen. Im einfachsten Falle ist der Prozessor mittels des Programmcodes dafür ausgebildet, die Betriebszeit des Werkzeugs abzulegen oder die Zahl von Benutzungsereignissen, beispielsweise die Zahl von Greifoperationen im Falle eines Greifers als Werkzeug, im Speicher abzulegen. Diese Daten können unter anderem dafür genutzt werden, um Wartungszeitpunkte oder Austauschzeitpunkte für das Werkzeug zu planen (Predictive Maintenance).

Eine weitere elektronische Komponente, deren Anordnung unmittelbar durch die die Doppelfunktion übernehmende Leiterplatine als vorteilhaft angesehen wird, ist ein integrierter Schaltkreis, der als Netzwerkcontroller ausgebildet ist, beispielsweise für Profinet, EtherCat oder Ethernet. Insbesondere vorzugsweise verfügt mindestens eine der Teileinrichtungen bzw. beide Teileinrichtungen über einen vorzugsweise metallischen Grundkörper, an dem die Kopplungsteileinrichtung der jeweiligen Kopplungseinrichtung vorgesehen ist. Der jeweilige Grundkörper verfügt über eine Umfangsfläche, zur Platzierung der Kontaktflächen, die vorzugsweise mit einer Einbuchtung versehen ist. In dieser Einbuchtung ist die Leiterplatine mit den Kontaktflächen vorzugsweise platziert oder sie erstreckt sich in diese Einbuchtung hinein. Vorzugsweise weist die Leiterplatine auch einen Abschnitt auf, der nicht innerhalb der vom Grundkörper definierten und vorzugweise im Wesentlichen runde Außenkontur platziert ist, um ausreichend Raum für die Aufnahme von integrierten Schaltkreisen oder Sensoren zu schaffen.

Neben der Werkzeugschnittstelle selbst betrifft die Erfindung auch einen Roboter, wie insbesondere einen Industrieroboter oder einen kollaborativen Roboter, der in gattungsüblicher Weise über einen Roboterarm verfügt, der insbesondere mittels schwenkbaren Gelenken ein endseitig angebrachtes Werkzeug bewegen und an die jeweils erforderliche Bearbeitungsposition führen kann. Die Befestigung des Werkzeugs erfolgt dabei über eine Werkzeugschnittstelle oben beschriebener Art.

### KURZBESCHREIBUNG DER ZEICHNUNGEN

Weitere Vorteile und Aspekte der Erfindung ergeben sich aus den Ansprüchen und aus der nachfolgenden Beschreibung eines bevorzugten Ausführungsbeispiels der Erfindung, das nachfolgend anhand der Figuren erläutert sind.
Fig. 1 zeigt einen erfindungsgemäßen Roboter, an den mittels einer Werkzeugschnittstelle 10 bestehend aus zwei Teileinrichtungen ein Werkzeug angekoppelt ist.
Fig. 2 zeigt die Werkzeugschnittstelle in isolierter Darstellung.
Fig. 3 zeigt eine der Teileinrichtungen der Werkzeugschnittstelle in geschnittener Darstellung.
Fig. 4 zeigt die Kopplungsseiten beider Teileinrichtungen.

### DETAILLIERTE BESCHREIBUNG DER AUSFÜHRUNGSBEISPIELE

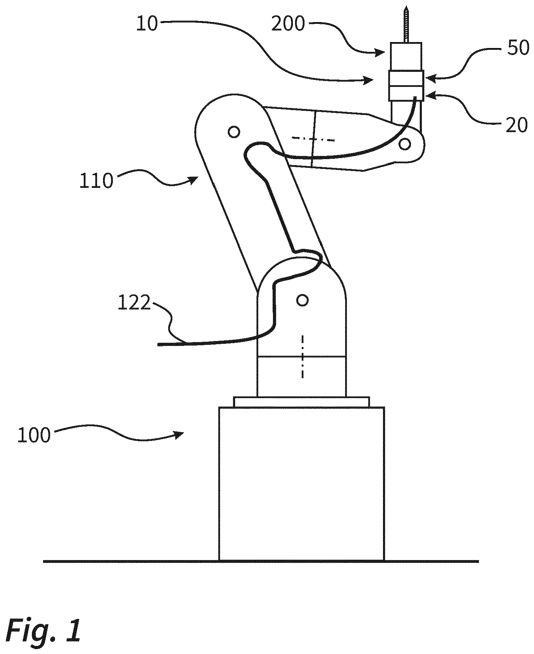

Fig. 1 zeigt einen Roboter 100, der über einen Roboterarm 110 verfügt, mittels dessen ein Werkzeug 200 flexibel bewegbar ist und insbesondere in eine Arbeitsposition verbracht werden kann und zum Zwecke des Werkzeugwechsels an eine Wechselstation bewegt werden kann. Entlang des Roboterarms 110 verlaufen Versorgungsleitungen zur Übertragung elektrischer Signale.

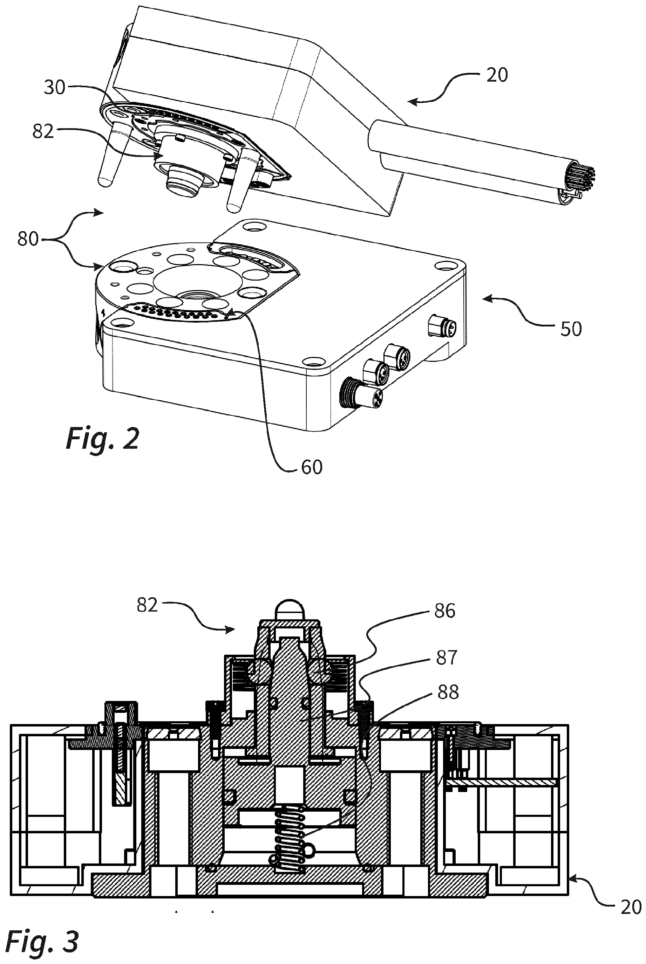

Die Fig. 2 zeigt zwei Teileinrichtungen 2, 50 der Werkzeugschnittstelle 10, mittels derer bei dem Roboter 100 das Werkzeug 200 mit dem Roboterarm 210 gekoppelt ist.

Die erste Teileinrichtung 20 ist zur festen Anbringung am Roboterarm 110 vorgesehen. Die zweite Teileinrichtung 50 ist auf der Werkzeugseite vorgesehen.

Die beiden Teileinrichtungen 20, 50 werden im Betrieb regelmäßig aneinander angekoppelt, wenn das entsprechende Werkzeug 200 gemäß Arbeitsablauf des Roboters 100 benötigt wird, und wieder voneinander abgekoppelt, wenn ein anderes Werkzeug verwendet werden soll. In Phasen, in denen das Werkzeug 200 nicht benötigt wird, wird es zusammen mit seiner Teileinrichtung 50 an einem definierten Lagerplatz abgelegt, insbesondere in einem hier nicht dargestellten Werkzeugmagazin.

Die beiden Teileinrichtungen 20, 50 verfügen über eine Kopplungseinrichtung 80 zur mechanischen Kopplung der Teileinrichtungen. Hierzu ist an einer der Teileinrichtungen 20, 50, vorzugsweise an der werkzeugseitigen Teileinrichtung 50, eine Kopplungsausnehmung 84 vorgesehen, in die ein Kopplungsstutzen 82 der anderen Teileinrichtung 20 beim Koppeln einfährt. Der Kopplungsstutzen 82 verfügt in der aus Fig. 3 ersichtlichen Weise über außenseitige Durchbrechungen, in denen Verriegelungskörper 86 angeordnet sind, vorliegend Verriegelungskugeln 86. Mittels eines gemeinsamen Verriegelungsaktors 87 können diese Verriegelungskörper 86 nach außen verfahren werden und hier gegen Einfahren gesichert werden. Im Falle der vorliegenden Gestaltung ist vorgesehen, dass der Verriegelungsaktor 87 stets durch eine Feder 88 in Richtung seiner Verriegelungsstellung gedrückt wird. Wenn die beiden Teileinrichtungen 20, 50 sich in der Kopplungsstellung befinden und die Verriegelungskörper 86 mittels des Verriegelungsaktors 87 nach außen gedrückt sind, so sind hierdurch die Teileinrichtungen 20, 50 fest miteinander verbunden, so dass das Werkzeug 200 mittels des Roboterarms 110 in eine Bearbeitungsposition gebracht werden kann.

Soll das Werkzeug 200 abgekoppelt werden, so wird es üblicherweise vom Roboterarm 110 an einen Ablageplatz bewegt. Dort wird dann der Verriegelungsaktor 87 zurückgefahren, beispielsweise pneumatisch oder elektrisch. Auch eine manuelle Verlagerung ist möglich. Durch die Verlagerung des Verriegelungsaktors 87 wird der verriegelte Zustand aufgehoben. Die Verriegelungskörper 86 können wieder nach innen in den Kopplungsstutzen einfahren und die Teileinrichtungen 20, 50 können voneinander getrennt werden.

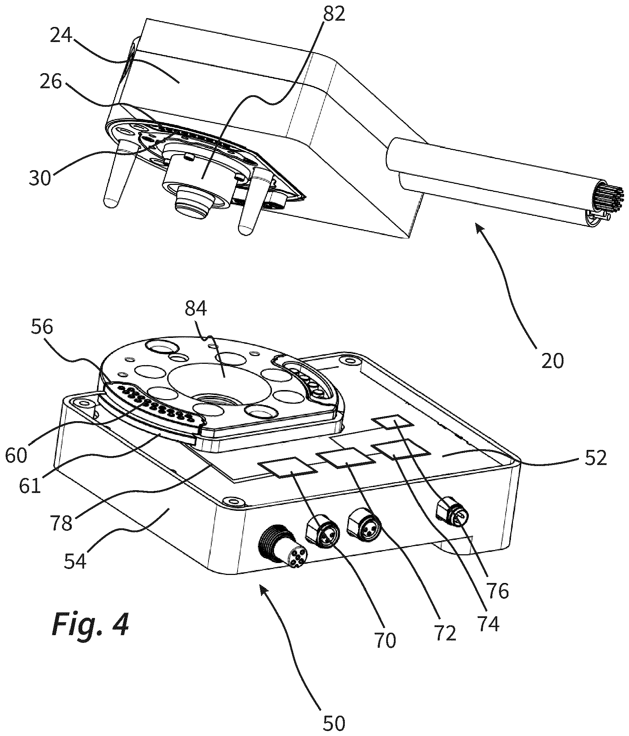

Wie Fig. 4 zeigt, sind die Teileinrichtungen 20, 50 zur Übertragung von Daten und elektrischer Leistung ausgebildet. Zu diesem Zweck weisen beide Teileinrichtungen 20, 50 in ihrem Grundkörper 24, 54, der auch die jeweiligen Kopplungsteileinrichtungen 82, 84 trägt, außenseitige Einbuchtungen 26, 56 auf, in denen elektrisch leitende Kontaktflächen 30, 60 vorgesehen sind. Diese Kontaktflächen 30, 60 sind vorzugsweise zumindest an einer der beiden Teileinrichtungen 20, 50 als federnd gelagerte Kontaktflächen 30, 60 ausgebildet, um eine sichere Kontaktierung zu gewährleisten.

Wenn die beiden Teileinrichtungen 20, 50 aneinander durch die Kopplungseinrichtung 80 mechanisch gekoppelt werden, so gelangen die einander jeweils gegenüberliegenden Kontaktflächen 30, 60 in Kontakt miteinander, so dass elektrische Leistung und elektronische Signale übermittelt werden können.

An mindestens einer der beiden Teileinrichtungen 20, 50 sind die Kontaktflächen 30, 60 bzw. die mit einer Feder ausgerüsteten Bauelemente, die die Kontaktfläche aufweisen, auf einer Leiterplatine 22, 52 angebracht, die sich von außen in die Einbuchtungen 26, 56 hinein erstreckt. Im Falle der Kontaktflächen 60 auf der Seite des Werkzeugs sind die Kontaktflächen an metallischen Stiften vorgesehen, die auf die Platine gelötet sind. Schützend umgeben sind die Kontakte durch ein Stützteil 61, welches für jede Kontaktfläche 60 eine Aussparung aufweist.

Diese Leiterplatine 22, 52 dient allerdings nicht ausschließlich dem Tragen der Kontaktflächen 30, 60, sondern weist eine Anzahl weiterer elektronischer Komponenten auf. So ist im Falle der werkzeugseitigen Teileinrichtung 50 auf der Leiterplatine 52 neben den Kontaktflächen 60 noch ein Mikroprozessor 72, ein Netzwerkcontroller 70 sowie ein Speicherchip 74 vorgesehen. Weiterhin ist eine Sensoreinheit 76 vorgesehen, die beispielsweise einen Beschleunigungsaufnehmer umfassen kann.

Die elektronischen Komponenten 70, 72, 74, 76 sind untereinander und mit den Kontaktflächen 60 über Leiterbahnen 78 der Leiterplatine 52 verbunden. Der Prozessor 72 kann auf diese Art und Weise über den Netzwerkcontroller 70 mit einer Gegenstelle wie einem Steuergerät des Roboters 100 oder eine zentralen Steuereinheit, die mehrere Roboter steuert, Daten austauschen.

Die Anordnung der genannten elektronischen Komponenten 70, 72, 74, 76 auf einer gemeinsamen Leiterplatine 52 zusammen mit den Kontaktflächen 60 hat eine Reihe von Vorteilen. Neben der Kosteneinsparung und einer verringerten Baugröße, die sich durch diese Integration ergibt, ist insbesondere eine erleichterte Montage wesentlich. Bei der Montage der jeweiligen Teileinrichtung 20, 50 kann ein großer Teil der elektronischen Komponenten der Teileinrichtung 20, 50 bzw. die Gesamtheit dieser Komponenten durch Installation der bereits zuvor bestückten Leiterplatine 22, 52 in die Teileinrichtung 20, 50 eingebaut werden. Insbesondere entfällt der Bedarf oder verringert sich der Bedarf, innerhalb der Teileinrichtung 20, 50 Kabelverbindungen zu schaffen, da die auf einer gemeinsamen Leiterplatine 22, 52 angeordneten elektronischen Komponenten 70, 72, 74, 76 bereits überdie Leiterbahnen 78 miteinander verbunden sind.

Neben der erleichterten Montage führt der Wegfall oder die Verminderung solcher Kabelverbindungen auch zu einer erhöhten Zuverlässigkeit. Die Gefahr, dass sich eine Kabelverbindung unter dem Eindruck der auf die Teileinrichtung 20, 50 wirkenden Kräfte löst oder die entsprechenden Stecker aufgrund von Korrosion nicht mehr zuverlässig arbeiten, ist reduziert.

Der Mikroprozessor 72 kann dafür ausgebildet sein, über die Kontaktflächen 30, 60 Steuerbefehle einer externen Steuereinheit entgegenzunehmen, um den Aktor des Werkzeugs 200 entsprechend zu steuern.

Der Mikroprozessor 72 ist zu diesem Zweck und zu weiteren unten beschriebenen Zwecken dafür ausgebildet, Programmcode aus dem Speicher 74 zu lesen, um diesen abzuarbeiten. Hierdurch sind verschiedene weitere Funktionen abbildbar, die bei dem vorliegenden Beispiel alle gemeinsam umgesetzt sind. Dies ist jedoch exemplarisch zu verstehen. Der Prozessor 72 könnte auch nur eine oder einige der hier beschriebenen Funktionen übernehmen.

Zunächst sind im Speicher 74 zwei Identifikationskennzeichen abgelegt, von denen eines das konkrete Werkzeug 200 oder die konkrete Teileinrichtung 50 bezeichnet und allein dieser zugeordnet ist. Das andere Identifikationskennzeichen ist ein typabhängiges Identifikationskennzeichnen, welches die Art der Teileinrichtung 50 bzw. des daran vorgesehenen Werkzeugs 200 beschreibt.

Sobald die werkzeugseitige Teileinrichtung 50 an der roboterseitigen Teileinrichtung 20 angekoppelt wurde und somit elektrische Leistungzum Betrieb der elektronischen Komponenten über die Kontaktflächen 30, 60 bereitsteht, erfolgt eine diesbezügliche Datenübermittlung. Der Prozessor 72 liest die Identifikationskennungen aus dem Speicher 74 aus und sendet diese über den Netzwerkcontroller 70 sowie die Kontaktflächen 3, 60 an eine externe Gegenstelle, insbesondere an eine Steuereinrichtung zur Steuerung des Roboters 100. Die externe Gegenstelle kann die so erfassten Informationen mit den erwarteten Informationen abgleichen und die Fortsetzung der Bearbeitung abbrechen, wenn der Typ des Werkzeugs 200 nicht korrekt ist oder wenn ein anderes Werkzeug zur Ankoppelung erwartet worden ist.

Weiterhin ist der Programmcode im Speicher 74 dafür vorgesehen, bei Abarbeitung durch den Prozessor 72 Daten vom Sensor 76 zu erfassen und weiterzuverarbeiten. Die Weiterverarbeitung kann dabei darin bestehen, dass die Sensordaten analysiert werden, um eine Fehlfunktion zu erfassen. Es kann vorgesehen sein, dass im Falle einer solchen Fehlfunktion Daten an eine externe Gegenstelle über die Kontaktflächen 30, 60 gesendet wird. Weiterhin können die erfassten Sensordaten und/oder Benutzungsdaten, die sich aus den von einer externen Steuereinheit empfangenen Daten ergeben, im Speicher abgelegt sein, um eine Benutzungshistorie des betreffenden Werkzeugs aufzustellen.

Eine solche Benutzungshistorie kann dann herangezogen werden, um Wartungsmaßnahmen am Werkzeug 200 oder den Austausch des Werkzeugs 200 zu planen. Insbesondere ist hierfür vorgesehen, dass die im Speicher 74 abgelegten Daten von Prozessor 72 oder von einem externen Prozessor analysiert werden, um Wartungs- oderAustauschbedarf zu erkennen.

## Patentansprüche

1. Werkzeugschnittstelle (10) zur Ankopplung eines Werkzeugs (200) an den Roboterarm (110) eines Roboters (100) mit den folgenden Merkmalen:
a. die Werkzeugschnittstelle (10) weist eine roboterarmseitige Teileinrichtung (20) und eine werkzeugseitige Teileinrichtung (50) auf, und
b. die beiden Teileinrichtungen (20, 50) weisen eine Kopplungseinrichtung (80) zur mechanischen Ankopplung des Werkzeugs (200) an den Roboterarm (110) auf, und
c. die beiden Teileinrichtungen (20, 50) sind zur Übertragung von Daten zwischen der Seite des Werkzeugs (200) und der Seite des Roboters (100) ausgebildet, wobei zu diesem Zweck beide Teileinrichtungen (20, 50) über Kontaktflächen (30, 60) verfügen, die bei mechanischer Ankopplung des Werkzeugs (200) an den Roboter (100) miteinander in Kontakt gelangen,
**dadurch gekennzeichnet, dass**
d. mindestens eine der Teileinrichtungen (20, 50) verfügt über eine Leiterplatine (22, 52), die eine Doppelfunktion übernimmt, indem
- die Leiterplatine (22, 52) Träger der Kontaktflächen (30, 60) der Teileinrichtung (20, 50) ist, und
- die Leiterplatine (22, 52) Träger mindestens eines integrierten Schaltkreises (70, 72, 74) und/oder Träger mindestens eines Sensors (76) ist, wobei der integrierte Schaltkreis (70, 72, 74) oder der Sensor (76) an Kontaktflächen (60) der Teileinrichtung (50) angeschlossen ist.

2. Werkzeugschnittstelle (10) nach Anspruch 1 mit dem folgenden zusätzlichen Merkmal:
a. die die Doppelfunktion übernehmende Leiterplatine (22, 52) weist mindestens einen Sensor (76) auf, der als Beschleunigungsaufnehmer ausgebildet ist.

3. Werkzeugschnittstelle (10) nach Anspruch 1 oder 2 mit dem folgenden zusätzlichen Merkmal:
a. die die Doppelfunktion übernehmende Leiterplatine (22, 52) weist mindestens einen Prozessor (72) auf, der zur Auswertung von Sensordaten ausgebildet ist.

4. Werkzeugschnittstelle (10) nach einem der vorstehenden Ansprüche mit dem folgenden zusätzlichen Merkmal:
a. die die Doppelfunktion übernehmende Leiterplatine (22, 52) weist mindestens einen integrierten Schaltkreis (74) auf, der über einen Speicher verfügt oder als Speicher (74) ausgebildet ist.

5. Werkzeugschnittstelle (10) nach Anspruch 4 mit dem folgenden zusätzlichen Merkmal:
a. in dem Speicher (74) ist eine für den Werkzeugtyp oder das Werkzeug eindeutige Identifikationskennung gespeichert.

6. Werkzeugschnittstelle (10) nach Anspruch 4 oder 5 mit dem folgenden zusätzlichen Merkmal:
a. in dem Speicher (74) sind Programmanweisungen gespeichert, mittels derer der Roboterarm (110) und/oder das Werkzeug (200) in einem Teach-In-Modus programmierbar sind.

7. Werkzeugschnittstelle (10) nach einem der Ansprüche 4 bis 6 mit dem folgenden zusätzlichen Merkmal:
a. in dem Speicher (74) sind Programmanweisungen gespeichert, mittels derer Sensordaten ausgewertet und/oder weiterverarbeitet werden können.

8. Werkzeugschnittstelle (10) nach einem der Ansprüche 4 bis 7 mit dem folgenden zusätzlichen Merkmal:
a. in dem Speicher sind Daten über eine Benutzungshistorie des Werkzeugs (200) gespeichert.

9. Werkzeugschnittstelle (10) nach einem der vorstehenden Ansprüchen mit dem folgenden zusätzlichen Merkmal:
a. die die Doppelfunktion übernehmende Leiterplatine (22, 52) weist mindestens einen integrierten Schaltkreis (70) auf, der als Netzwerkcontroller (70) ausgebildet ist.

10. Werkzeugschnittstelle (10) nach einem der vorstehenden Ansprüche mit dem folgenden zusätzlichen Merkmal:
a. mindestens eine der Teileinrichtungen (20, 50) verfügt über einen metallischen Grundkörper (24, 54), an dem eine Kopplungsteileinrichtung (82, 84) der Kopplungseinrichtung (80) vorgesehen ist, und
b. der metallische Grundkörper (24, 54) verfügt im Bereich einer Umfangsfläche über eine Einbuchtung (26, 56), und
c. die Leiterplatine (22,52) der Teileinrichtung (20, 50) erstreckt sich in diese Einbuchtung (26, 56) hinein oder ist innerhalb der Einbuchtung (26, 56) angeordnet.

11. Werkzeugschnittstelle (10) nach einem der vorstehenden Ansprüche mit dem folgenden zusätzlichen Merkmal:
a. die Kopplungseinrichtung ist zur formschlüssigen Kopplung ausgebildet und weist hierfür an einer Teileinrichtung (20) einen Kopplungsstutzen (82) auf, der in eine Kopplungsausnehmung (84) der anderen Teileinrichtung (50) einfahrbar ist, wobei an einer Außenseite des Kopplungsstutzens (82) mindestens ein verlagerbarer Verriegelungskörper (86) vorgesehen ist, der zwischen einer Freigabestellung und einer formschlüssig verriegelten Stellung der Kopplungseinrichtung (80) verlagerbar ist.

12. Roboter (100) mit dem folgenden Merkmal:
a. der Roboter (100) verfügt über einen beweglichen Roboterarm (110), an dessen distalem Ende ein Werkzeug (200) mittels einer Werkzeugschnittstelle (10) angekoppelt ist, **gekennzeichnet durch** das folgende Merkmal:
b. die Werkzeugschnittstelle (10) ist nach einem der vorstehenden Ansprüche ausgebildet.
